# EUROPÄISCHE PATENTANMELDUNG

(11) **EP 1 213 530 A2**
(43) Veröffentlichungstag der Anmeldung: **12.06.2002**
(21) Anmeldenummer: 01128687.9
(22) Anmeldetag: 01.12.2001
(51) Int. Cl.: F17C 13/04

(54) **Kompaktgasentnahmesystem**

(30) Priorität: 07.12.2000 DE 10060726
(71) Anmelder: MESSER GRIESHEIM GmbH, 65933 Frankfurt am Main (DE)
(72) Erfinder: Pongraz, Johann, 47259 Duisburg (DE)

(57) **Zusammenfassung**

Das Gasentnahmesystem für Druckgasbehälter ist durch eine besonders kompakte Bauweise gekennzeichnet. Das Gasentnahmesystem weist einen plattenförmigen Grundkörper 1 auf, in den Gaskanäle 2, 6, 7, ein Absperrelement 5 und vorzugsweise ein Druckminderer integriert sind. Das Gasentnahmesystem wird beispielsweise bei Brennstoffzellen eingesetzt, wo es am Brennstoffzellengehäuse direkt angebracht werden kann.

## Beschreibung

Die Erfindung betrifft ein Gasentnahmesystem, einen Druckgasbehälter mit einem Gasentnahmesystem, eine Brennstoffzelle mit Gasentnahmesystem und eine Verwendung des Gasentnahmesystems bei Brennstoffzellen.

FR 9506784-A1 beschreibt eine Bauteilgruppe Absperrventil/Druckminderer für eine Druckgasflasche. Der Druckminderer ist einstufig.

Aufgabe der Erfindung besteht in der Bereitstellung einer kompakten Gasentnahmevorrichtung für die Gasversorgung von Brennstoffzellen aus Druckgasbehältern.

Gelöst wurde die Aufgabe durch ein Gasentnahmesystem mit den in Anspruch 1 beschriebenen Merkmalen.

Das Gasentnahmesystem besteht aus einem Armaturenkörper an dem ein Druckregler und ein Absperrelement (z. B. Magnetventil) angeordnet sind. Der Armaturenkörper weist einen Gaseingang, einen Gasweg und einen Gasausgang auf. Am Gasausgang befindet sich vorteilhaft eine Gasdosiervorrichtung z. B. eine Lochblende oder Verengung im Gasweg. Am Gaseingang ist ein Übergangsstück angeordnet, das in der Regel ein Gewinde zur Befestigung an einer Druckgasquelle aufweist. Am Gasausgang ist ein Kopplungselement zum Anschluß an eine Gasleitung oder einen Gasverbraucher angeordnet, z. B. ein Anschlußgewinde oder Bajonettanschluß. Gasverbraucher sind vorzugsweise Brennstoffzellen, die Gasart zum Beispiel Wasserstoff.

Der Armaturenkörper ist vorzugsweise auf einer Seite flach. Vorteilhaft besteht der Armaturenkörper im wesentlichen aus einer Platte. Der Armaturenkörper besteht in der Regel aus Metall (z. B. Messing, Aluminium, Stahl, Edelstahl) oder Kunststoff (z.B. Polyamid, Polyacetal, Polyester, Polyolefin). Bei Niederdruckanwendungen ist Kunststoff besonders vorteilhaft.

Druckgasquellen sind in der Regel Druckgasbehälter wie Druckgasflaschen (z. B. mit geometrischem Volumen im Bereich von 0,1 bis 5 Liter), vorzugsweise Kleinstdruckgasbehälter, insbesondere Gaspatronen oder Druckdosen. Die Druckgasbehälter sind für einen Fülldruck im Niederdruckbereich (z. B. 1,5 bis 10 bar absolut), Mitteldruck (z. B. oberhalb von 10 bar bis 100 bar absolut) oder Hochdruck (z. B. oberhalb von 100 bar bis 300 bar absolut) vorgesehen. Besonders bevorzugt sind Kleinstdruckgasbehälter mit einem geometrischen Volumen im Bereich von 0,01 bis 1 Liter, insbesondere für Hochdruck. Bei Einsatz von Hochdruck-Druckgasbehältern als Druckgasquelle, insbesondere von Hochdruck-Kleinstdruckgasbehältern, wird vorteilhaft ein Druckminderer, vorzugsweise ein einstufiger Druckminderer, als erste Druckminderungsstufe am Druckgasbehälter angeordnet, die mit der Druckminderungsstufe des Gasentnahmesystems (des Armaturenblocks) kombiniert wird.

Gasentnahmesystem und Druckgasquelle bilden vorzugsweise eine Einheit. Vorteilhaft ist das Gasentnahmesystem mit entsprechendem Anschlußstück auch bei Druckdosen verwendbar.

Das Gasentnahmesystem zeichnet sich durch eine universelle Bauweise aus, die zu einer Reihe von Vorteilen führt.

Besonders vorteilhaft wird das Gasentnahmesystem bei Brennstoffzellen, insbesondere Brennstoffzellenstapeln (sogenannte "Stacks"), wo mehrere plattenförmige Brennstoffzellen in einem Stapel kombiniert sind. Der Armaturenblock des Gasentnahmesystems wird vorzugsweise mit der flachen Unterseite auf einem solchen Brennstoffzellenstapel angeordnet. In der Regel wird der Armaturenblock direkt auf der flachen Unterseite oder Oberseite des Brennstoffzellengehäuses angebracht. Auf diese Weise können die Gasversorgungswege erheblich verkürzt und der Aufbau einer Brennstoffzelleneinheit vereinfacht werden. Eine Brennstoffzelle oder ein Brennstoffzellenstapel können vorteilhaft mit zwei Gasentnahmesystemen ausgestattet werden, beispielsweise mit einem Gasentnahmesystem für Wasserstoff an einer Seite (z. B. der Oberseite) und einem Gasentnahmesystem für Sauerstoff an der anderen (gegenüberliegenden) Seite (z. B. der Unterseite) des Brennstoffzellengehäuses. Der Armaturenblock wird in der Regel parallel zu den Elektrodenflächen angeordnet.

Die Erfindung wird anhand der Zeichnung erläutert.

Es zeigen
Fig. 1 das Gasentnahmesystem im Längsschnitt, montiert auf einer Druckgasflasche,
Fig. 2 das Gasentnahmesystem in der Draufsicht.

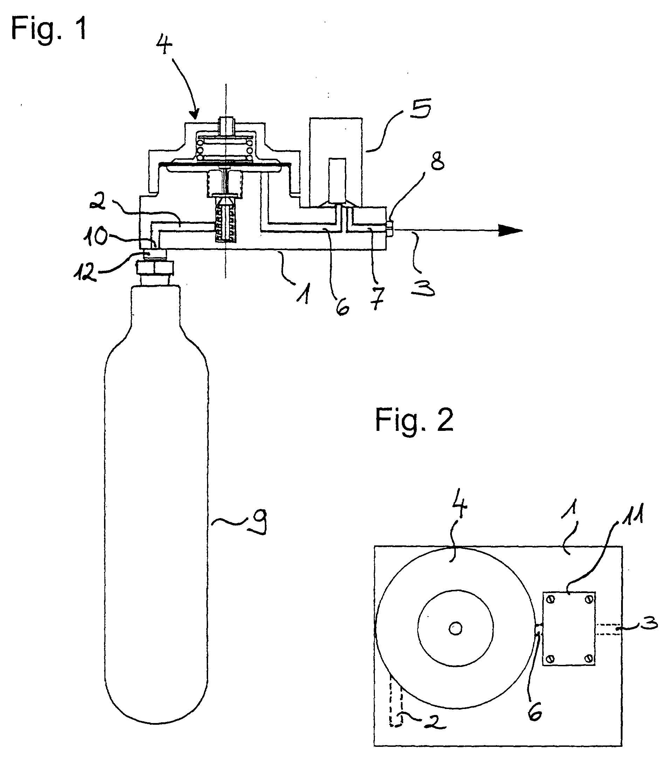

In Fig. 1 wird ein Beispiel des erfindungsgemäßen Gasversorgungssystems gezeigt. Der Grundkörper 1 besteht aus einem sogenannten Armaturenblock, der vorteilhaft aus einer Platte, vorzugsweise einer Kunststoffplatte bei Niederdruckanwendung, gefertigt wird. Der Boden des Grundkörpers 1 ist vorzugsweise flach. Der Grundkörper hat beispielsweise folgende Maße: 60 mm Länge (von Gaseingang 2 bis Gasausgang 6), 48 mm Breite und ca. 30 mm Höhe (ohne Druckmindererdeckel und Absperrelement). Der Grundkörper 1 enthält einen Gaskanal mit den Gaskanalabschnitten 2, 6, 7 zwischen Gaseingang 10 und Gasausgang 3. Der Gaskanal besteht in der Regel aus mehreren Bohrungen. Der Gaskanal hat beispielsweise einen inneren Durchmesser von 3 mm.

In dem Grundkörper 1 ist der Druckminderer 4 angeordnet. Der gezeigte Druckminderer hat einen fest voreingestellten Druckregelbereich. Beispielsweise wird ein von der Druckgasquelle (Druckgasbehälter 9) anliegender Druck (Vordruck) von 20 bar absolut auf einen Druck (Hinterdruck) z. B. 0,8 bis 3 bar, insbesondere 1,5 bar absolut reduziert.
Vordruckseitig führt der Gaskanalabschnitt 6 zu dem Absperrelement 5, vorzugsweise ein Magnetventil.
Vor dem Gasausgang 3 ist eine Dosiereinheit 8 angeordnet, z. B. eine Lochblende, mit der der Gasstrom begrenzt wird.
Am Gaseingang 10 ist ein Übergangsstück angeordnet, z. B. ein Gewindestück (z.B. 1/8" NPT), das die Verbindung des Gasversorgungssystems zum Druckgasbehälter 9 herstellt. Der Druckgasbehälter oder Gasspeicherbehälter 9 ist beispielsweise eine Kleinstdruckgasflasche mit einem geometrischen Volumen von 1 Liter. Der Druckgasbehälter 9 dient beispielsweise zur Speicherung von Wasserstoff bei einem maximalen Fülldruck von z.B. 20 bar.

Das Gasversorgungssystem aus Druckgasbehälter 9 und Gasarmatur mit dem flachen Boden des Grundkörpers 1 ist besonders vorteilhaft für die Gasversorgung von Brennstoffzellen. Durch die viereckige Geometrie des Bodens kann die Gasarmatur direkt auf einer Brennstoffzelle oder einem Brennstoffzellenstapel integriert werden (z. B. an einer Gehäusewand der Brennstoffzelle). Leitungswege werden dadurch auf ein Minimum reduziert. Die Gasarmatur eignet sich insbesondere für den Einsatz bei mobilen Brennstoffzellen.

Fig. 2 zeigt den Armaturenblock 1 in der Draufsicht. Man erkennt den Deckel des Druckminderers 4 und eine Halteplatte 11 für die Montage des Absperrelementes 5, hier dem Magnetventil.

### Bezugszeichen

- 1: Grundkörper (Armaturenblock)
- 2: Gaskanalabschnitt
- 3: Gasausgang
- 4: Druckminderer
- 5: Absperrelement
- 6: Gaskanalabschnitt
- 7: Gaskanalabschnitt
- 8: Dosiereinheit
- 9: Gasspeicherbehälter (Druckgasbehälter)
- 10: Gaseingang
- 11: Halteplatte (Montageplatte)
- 12: Übergangsstück

## Patentansprüche

1. Gasentnahmesystem mit plattenförmigem Grundkörper (1), in den Gaskanäle (2, 6, 7) und ein Absperrelement (5) integriert sind.

2. Gasentnahmesystem nach Anspruch 1, **dadurch gekennzeichnet, daß** der Grundkörper (1) eine flache Seite aufweist.

3. Gasentnahmesystem nach Anspruch 1 oder 2, **dadurch gekennzeichnet, daß** der Grundkörper (1) einen Anschluß für eine Druckgasquelle aufweist.

4. Gasentnahmesystem nach Anspruch 1, **dadurch gekennzeichnet, daß** das Absperrelement (5) ein Magnetventil ist.

5. Gasentnahmesystem nach einem der Ansprüche 1 bis 4, **dadurch gekennzeichnet, daß** das Gasentnahmesystem eine Gasdosiereinheit (8) aufweist.

6. Gasentnahmesystem nach einem der Ansprüche 1 bis 5, **dadurch gekennzeichnet, daß** das Gasentnahmesystem ein Kopplungsteil (12) für einen Druckgasbehälter (9) aufweist.

7. Gasentnahmesystem nach Anspruch 6, **dadurch gekennzeichnet, daß** das Kopplungsteil (12) zur Kopplung eines Druckgasbehälters (9) mit Schnellschlußventil ausgebildet ist.

8. Gasentnahmesystem nach Anspruch 6, **dadurch gekennzeichnet, daß** der Druckgasbehälter (9) eine Kleinstdruckgasflasche oder eine Druckdose ist.

9. Druckgasbehälter mit einem Gasentnahmesystem nach einem der Ansprüche 1 bis 7.

10. Brennstoffzelle mit einem Gasentnahmesystem nach einem der Ansprüche 1 bis 7 oder Druckgasbehälters nach Anspruch 9.

11. Brennstoffzelle nach Anspruch 10, **dadurch gekennzeichnet, daß** die Brennstoffzelle mit Wasserstoff betrieben wird, der aus einer Druckgasquelle bereitgestellt wird.

12. Verwendung eines Gasentnahmesystems nach einem der Ansprüche 1 bis 7 oder Druckgasbehälters nach Anspruch 9 bei Brennstoffzellen oder zur Gasversorgung von Brennstoffzellen.
